# EUROPÄISCHE PATENTSCHRIFT

(11) **EP 1 790 896 B1**
(45) Veröffentlichungstag und Bekanntmachung des Hinweises auf die Patenterteilung: **25.06.2008**
(21) Anmeldenummer: 06124667.4
(22) Anmeldetag: 23.11.2006
(51) Int. Cl.: F16L 13/14, F16L 33/207

(54) **Pressfitting für ein Rohr**
Press fitting for a pipe
Raccord à sertir pour un tuyau

(30) Priorität: 24.11.2005 EP 05111243
(43) Veröffentlichungstag der Anmeldung: 30.05.2007
(73) Patentinhaber: Uponor Innovation AB, 513 81 Fristad (SE)
(72) Erfinder: Dankbar, Bernhard, 48607, Ochtrup (DE); Dittmar, Rainer, 97532, Weipoltshausen (DE); Claußen, Jörg, 48329, Havixbeck (DE); Gillig, Thomas, 97246, Eibelstadt (DE); Oing, Hermann Heinrich, 48599, Gronau (DE)
(74) Vertreter: Hilleringmann, Jochen

(56) Entgegenhaltungen:
- EP-A- 1 174 652
- EP-A- 1 547 728
- EP-A- 1 571 383
- EP-A- 1 596 116
- DE-B3- 10 233 559
- DE-U1- 20 013 425
- DE-U1- 29 907 585
- DE-U1- 29 920 371
- FR-A- 2 863 032

## Beschreibung

Die Erfindung betrifft einen Pressfitting für ein Rohr, und zwar insbesondere für ein Kunststoffrohr oder ein Rohr aus einem Kunststoff-/Metallverbundwerkstoff. Ferner betrifft die Erfindung ein Verfahren zum Verpressen von Pressfittings.

Pressfittings für den Anschluss von Rohren sind in einer Vielzahl von Ausgestaltungen bekannt. Sie weisen zumeist eine Presshülse auf, die mittels eines Presswerkzeuges radial verformt wird, wodurch das von der Presshülse umgebende Anschlussende des Rohres gegen einen Stützkörper des Fittings gedrückt und abgedichtet wird.

Es ist mitunter wünschenswert, wenn man von außen erkennen kann, dass der Pressfitting verpresst ist. Ein Pressfitting mit einer derartigen Verpressanzeige ist beispielsweise in DE-O-299 07 585 beschrieben und weist einen als Führungsring für das Presswerkzeug dienenden Kunststoffring aus einem bei Einwirkung des Presswerkzeuges zerstörbaren Material auf, Weitere Beispiele für Pressfittings mit Verpressanzeige finden sich in EP-A-1 538 383, EP-A-1 547 728 und EP-A-1 571 383.

Für eine zuverlässige Verpressanzeige ist es erforderlich, dass das Verpressanzeigeelement, beispielsweise ein Verpressanzeigeringe, wie es in den zuvor erwähnten Druckschriften beschrieben ist, von der Presshülse, an der es gehalten ist, nach dem Verpressvorgang abfällt. Dies ist insofern erschwert, als der Verpressanzeigering durch das Presswerkzeug gegen die Presshülse gedrückt wird. Dabei kann sich das (zumeist Kunststoff-)Material des Verpressanzeigerings in die Presshülse eindrücken und dort haften bleiben, so dass der zerstörte und gegebenenfalls lediglich deformierte Verpressanzeigering sich noch an der Presshülse befindet. Diese Gefahr besteht um so mehr, wenn als Material für die Presshülse ein vergleichsweise weiches metallisches Material wie beispielsweise eine Aluminiumlegierung verwendet wird.

Die in den drei oben erwähnten europäischen Offenlegungsschriften offenbarten Verpressanzeigeringe weisen Segmente auf, deren Verbindung untereinander unter der Einwirkung des Presswerkzeuges zerstört werden sollen, da aber weiterhin auch bei diesen bekannten Pressfittings mit Verpressanzeigering auf die segmentierten Ringe "gepresst" wird, bleibt das oben beschriebene Problem, das die Segmente außen an der Presshülse nach dem Verpressvorgang weiterhin anhaften, bestehen. Damit kann aber aus größerem Abstand nicht erkannt werden, ob nun tatsächlich verpresst worden ist. Dies ist erst bei näherer Betrachtung des Verpressanzeigerings aus kurzer Entfernung möglich.

Aufgabe der Erfindung ist es, einen Pressfitting mit einer zuverlässig funktionierenden Verpressanzeige zu schaffen.

Zur Lösung dieser Aufgabe wird mit der Erfindung ein Pressfitting mit
- einem Fittingkörper, der einen Stützkörper aufweist, auf den ein anzuschließendes Rohr aufschiebbar ist,
- einer Presshülse, die einen Verpressbereich aufweist, in welchem bei Verpressung der Presshülse auf diese ein Presswerkzeug einwirkt, und einem Verpressanzeigering, der an der Presshülse gehalten ist, vorgeschlagen.

Bei diesem Pressfitting ist gemäß einer ersten Variante erfindungsgemäß vorgesehen,
- dass der Verpressanzeigering mehrere Ringsegmente aufweist, wobei einander zugewandte Enden benachbarter Ringsegmente untereinander durch zerstörbare oder von den Ringsegmenten trennbare (Verbindungs-) Stege verbunden sind, und
- dass der Verpressanzeigering derart an der Presshülse angeordnet ist, dass sich die Ringsegmente außerhalb des Verpressbereichs der Presshülse befinden und sich die Verbindungsstege und/oder von diesen abzweigende Teile bis in den Verpressbereich der Presshülse hinein erstrecken.

Ferner wird die obige Aufgabe durch das Verfahren gemäß der in Anspruch 19 beschriebenen Alternative gelöst.

Mit der Erfindung wird also ein Pressfitting vorgeschlagen, der einen Verpressanzeigering aufweist, welcher segmentiert ist, wobei benachbarte Segmente durch Verbindungsstege untereinander verbunden sind. Während die Ringsegmente außerhalb des Verpressbereichs der Presshülse angeordnet sind, erstrecken sich die Verbindungsstege bis in den Verpressbereich der Presshülse hinein. Die Verbindungsstege sind während des Verpressvorgangs der mechanischen Einwirkung des Presswerkzeuges ausgesetzt und werden daher zerstört, was vorteilhafterweise durch das Vorsehen von Sollbruchstellen noch begünstigt werden kann. In jedem Fall werden die Verbindungsstege oder aber ihre Verbindung zu den Ringsegmenten aufgetrennt, so dass die Ringsegmente nun keinen Halt mehr an der Presshülse haben und abfallen,

Die Erfindung ist sinngemäß also darin zu sehen, dass diejenigen Elemente des Verpressanzeigerings, die zur Anzeige einer Verpressung von der Presshülse abfallen sollen, nicht dem Presswerkzeug ausgesetzt sind, also von diesem insbesondere nicht gegen die Presshülse gepresst werden. Das Presswerkzeuge wirkt vielmehr auf die Verbindungselemente, mit denen die Ringelemente untereinander verbunden sind, ein und zerstört diese Verbindungselemente, was dann das Abfallen der Ringsegmente des Verpressanzeigerings zur Folge hat. Im ungünstigsten Fall könnte Material der Verbindungsstege nach dem Verpressvorgang noch außen an der Presshülse anhaften. In jedem Fall aber sind die im Verhältnis zu den Verbindungselementen wesentlich größeren Ringsegmente des Verpressanzeigerings von der Presshülse abgefallen.

Zweckmäßigerweise ist der Verpressanzeigering mit drei sich im wesentlichen jeweils um weniger als 120° erstreckende Segmente versehen, die durch vorzugsweise dünne Verbindungsstege, welche zweckmäßigerweise U- bzw. V-förmig oder auch trapezförmig ausgebildet sind, verbunden.

Der erfindungsgemäß vorgesehene Verpressanzeigering braucht nicht notwendigerweise geschlossen zu sein. Als "Ring" im Sinne des Verpressanzeigerings nach der Erfindung wird also im Rahmen dieser Erfindung auch ein Element verstanden, das sich beispielsweise lediglich um weniger als 360° längs der Wandung der Presshülse erstreckt.

Der Verpressanzeigering kann neben der Verpressanzeige noch eine weitere Funktion, nämlich die der Führung des Presswerkzeuges beim Pressvorgang, haben. Mit beendetem Verpressvorgang ist die Führung des Presswerkzeuges nicht mehr erforderlich, so dass die sich danach erfindungsgemäß ablösenden Segmente des Verpressanzeigerings dessen Funktion zur Führung des Presswerkzeuges nicht mehr beeinträchtigen können,

In vorteilhafter Weiterbildung der Erfindung kann vorgesehen sein, dass die Verbindungsstege untereinander verbunden sind. Hierzu weist der Verpressanzeigering einen mit Löchern versehenen Kragen auf, welcher sich an die Ringsegmente anschließt und diese hält. Der Kragen hat den Vorteil, dass der segmentierte Verpressanzeigering (nämlich über die axiale Erstreckung des Kragens) bis zur Verpressung an der Presshülse zuverlässig gehalten ist. Die Löcher in dem Kragen bzw. zylindrischem Fortsatz des Verpressanzeigerings sind nun so gewählt, dass sich einige der Löcher im Bereich zwischen benachbarten Ringsegmenten befinden. Mit anderen Worten geht also der Spalt zwischen benachbarten Ringsegmenten in ein Loch des Kragens über. Zwischen dieser Gruppe von Löchern kann der Kragen weitere Löcher aufweisen, was aber nicht zwingend erforderlich ist, für eine zuverlässige Zerstörung auch des Kragens des Verpressanzeigerings aber sicherlich vorteilhaft ist.

Die oben beschriebene erfindungsgemäße Lösung umfasst auch die Variante, dass sich neben den Ringsegmenten auch die Verbindungsstege außerhalb des Verpressbereichs der Presshülse befinden, das aber dann von den Verbindungsstegen abzweigende Teile sich bis in den Verpressbereich der Presshülse hinein erstrecken. Dieses Konzept eröffnet eine weitere Möglichkeit der Auftrennung der Verbindungsstege bzw. der Abtrennung der Verbindungsstege von den Ringsegmenten.

Werden die von den Verbindungsstegen abzweigenden Teile beispielsweise als Hebelelemente ausgebildet, die sich innerhalb des Verpressbereichs im Abstand zur Presshülse erstrecken, so wirkt auf diese Hebelelemente beim Verpressen ein Drehmoment, das die Hebelelemente verschwenkt. Hierdurch kommt es zu einer Tordierung der Verbindungsstege, was wiederum deren Auftrennung bzw. deren Abtrennung von den Ringsegmenten bewirkt. Diesbezüglich vorteilhaft ist es, wenn die Verbindungsstege Sollbruchstellen aufweisen oder die Verbindungsstellen der Verbindungsstege mit den Ringsegmenten als Sollbruchstellen ausgebildet sind.

Für die beiden zuvor genannten Alternativen der Ausgestaltung des Verpressanzeigerings gilt, dass die Ringsegmente mit Vorteil unter radialer, nach außen gerichteter Vorspannung an der Presshülse anliegen. Sobald nämlich dann die Verbindung benachbarter Ringsegmente untereinander durch die aufgetrennten Verbindungsstege aufgehoben ist, bewegen sich die Ringsegmente unter dem Einfluss Ihrer Vorspannung von der Presshülse weg, was den Abtrennvorgang unterstützt. Die Federkraft kann beispielsweise durch die Ausbildung des Innendurchmessers des Verpressanzeigerings mit Untermaß gegenüber dem Außendurchmesser der Presshülse oder aber durch an der Presshülse ausgebildete Federelemente in Form von Federzungen oder dergleichen aufgebracht sein. Es ist aber auch möglich, dass die nach außen gerichtete Kraft über die Verbindungsstege und deren Verformung beim Verpressen aufgebracht wird. Sind beispielsweise die Verbindungsstege in Umfangsrichtung verlaufend bogenförmig ausgestaltet, wobei sie von der Presshülse beabstandet sind, so werden sie zu Beginn der Einwirkung seitens des Presswerkzeuges durch dieses gestreckt, wodurch die Ringsegmente nach außen vorgespannt werden. Wenn dann im weiteren Verlauf der Verpressung die Auftrennung bzw. Abtrennung der Verbindungsstege erfolgt, kann die auf die Ringsegmente wirkende Vorspannung zur Unterstützung von deren Abtrennung von der Presshülse dienen.

Die oben genannte Aufgabe wird ferner durch einen Pressfitting mit den weiter oben zitierten Merkmalen gelöst, der jedoch im Unterschied zur ersten Variante erfindungsgemäß dadurch gekennzeichnet ist,
- dass der Verpressanzeigering einen außerhalb des Verpressbereichs angeordneten ersten axialen Abschnitt und einen bis in den Verpressbereich hineinragenden zweiten axialen Abschnitt aufweist,
- dass der zweite axiale Abschnitt eine Außenschrägfläche aufweist, entlang derer sich der Verpressanzeigering innerhalb seines zweiten axialen Abschnitts zu seinem von diesem gebildeten axialen Ende hin verjüngt, und
- dass die Schrägfläche des Verpressanzeigerings zum Zusammenwirken mit dem Presswerkzeug dergestalt vorgesehen ist, dass das Presswerkzeug den Verpressanzeigering beim Verpressen der Presshülse relativ zu dieser aus einer Ausgangsposition in eine Verpressanzeigeposition axial verschiebt.

Ferner wird die oben genannte Aufgabe auch durch das in Anspruch 20 beschriebene alternative Verfahren gelöst.

Diese zweite Variante der Erfindung basiert auf dem Gedanken, dass sich das radial auf die Presshülse zu bewegende Presswerkzeug zu einer axialen Verschiebung des Verpressanzeigerings genutzt wird. Dies wird erreicht, indem der Verpressanzeigering (gedanklich) in zwei axiale Abschnitte unterteilt ist, von denen der erste Abschnitt außerhalb des Verpressbereichs angeordnet ist und der zweite Abschnitt bis in den Verpressbereich hineinragt. Innerhalb des zweiten Abschnitts weist der Verpressanzeigering eine Schrägfläche auf, entlang sich derer der Verpressanzeigering innerhalb seines zweiten Bereichs zu seinem von diesem gebildeten axialen Ende hin verjüngt. Durch Zusammenwirken des Presswerkzeuges mit dieser Schrägfläche kommt es zu einer axialen Verschiebung des Verpressanzeigerings, so dass sich der Verpressanzeigering ausgehend von einer Ausgangsposition bis in eine Verpressanzeigeposition axial verschiebt.

Eine zur zweiten Variante der Erfindung gleichwirkende Lösung, sozusagen als kinematische Umkehr, ist dadurch gegeben, dass der Verpressanzeigering innerhalb seines bis in den Verpressbereich hineinragenden zweiten axialen Abschnitts im wesentlichen keine Schrägfläche aufweist, eine derartige Schrägfläche aber am Presswerkzeug ausgebildet ist, so dass nun diese Schrägfläche des Presswerkzeuges beim Verpressen zu einer axialen Verschiebung des Verpressanzeigerings führt.

Je nach Dimensionierung und Auslegung von Presswerkzeug, Verpressanzeigering und Presshülse kann die axiale Ausrückung des Verpressanzeigerings derart sein, dass sich der Verpressanzeigering in seiner Verpressanzeigeposition außerhalb der Presshülse befindet.

Gemäß einer weiteren vorteilhaften Ausgestaltung des Pressfittings gemäß der zweiten Variante befindet sich der Verpressanzeigering in seiner Ausgangsposition außen an der Presshülse, die an ihrer Außenseite eine Markierung, beispielsweise Farbmarkierung, aufweist, welche durch den Verpressanzeigering in dessen Ausgangsposition verdeckt ist. Diese Markierung liegt frei, wenn sich der Verpressanzeigering axial in seine Verpressanzeigeposition bewegt hat.

Alternativ zu der zuvor beschriebenen vorteilhaften Ausgestaltung ist es möglich, dass der Verpressanzeigering innen an einem der axialen Enden der Presshülse, und zwar an dem dem Fittingkörper abgewandten axialen Ende der Presshülse aufgenommen ist. Die Presshülse weist in diesem Fall einen der Schrägfläche des zweiten Abschnitts des Verpressanzeigerings folgenden Aufweitungsabschnitt auf, auf den das Presswerkzeug beim Verpressvorgang einwirkt. Hierüber kommt es dann zur Einwirkung auf die Schrägfläche des Verpressanzeigerings, der sich demzufolge axial aus dem Ende der Presshülse herausbewegt. In der Verpressanzeigeposition ist der Verpressanzeigering zweckmäßigerweise an der Presshülse gehalten, was aber nicht notwendigerweise der Fall sein muss. Auch in diesem Ausführungsbeispiel mit innen an der Presshülse gehaltenem Verpressanzeigering kann sich dieser im verpressten Zustand der Presshülse vollständig von der Presshülse gelöst haben. Zweckmäßigerweise ist der Verpressanzeigering innerhalb seines von dem axialen Ende der Presshülse aufgenommenen Bereich mit einer Markierung versehen, die in der Ausgangsposition des Verpressanzeigerings verdeckt ist, in der Verpressanzeigeposition des Verpressrings aber außerhalb der Presshülse freiliegend positioniert ist.

In weiterer alternativer Ausgestaltung der Erfindung ist ein Pressfitting für ein Rohr, insbesondere ein Kunststoffrohr oder Rohr aus einem Kunststoff-Metall-Verbundwerkstoff vorgesehen, bei dem vorgesehen ist,
- dass der Verpressanzeigering einen ersten Abschnitt und einen bis in den Verpressbereich der Presshülse hineinragenden zweiten Abschnitt aufweist,
- dass der zweite Abschnitt eine Außenschrägfläche aufweist, entlang derer sich der Verpressanzeigering innerhalb seines zweiten Abschnitts zu seinem von diesem gebildeten axialen Ende hin verjüngt, und
- dass die Schrägfläche des Verpressanzeigerings zum Zusammenwirken mit dem Presswerkzeug dergestalt vorgesehen ist, dass das Presswerkzeug den Verpressanzeigering beim Verpressen der Presshülse relativ zu dieser aus einer Ausgangsposition in eine Verpressanzeigeposition axial verschiebt.

Bei dieser Variante liegen die beiden Abschnitte des Verpressanzeigerings nicht axial nebeneinander sondern sind im wesentlichen konzentrisch, d.h. radial nebeneinander angeordnet, und zwar unter Zwischenschaltung des axialen Endes der Presshülse. Der zweite Abschnitt des Verpressanzeigerings ist nämlich außen an dem axialen Ende der Presshülse angeordnet, während der erste Abschnitt des Verpressanzeigerings von dem (vorzugsweise aufgeweiteten) axialen Ende der Presshülse aufgenommen ist. Über die Schrägfläche am außen liegenden zweiten Abschnitt des Verpressanzeigerings wird dieser axial von der Presshülse abgerückt, wenn das Presswerkzeug auf die Presshülse zwecks Verpressung derselben einwirkt. Dabei wird dann der erste Abschnitt des Verpressanzeigerings, der von dem axialen Ende der Presshülse aufgenommen ist, freigelegt.

Die Verbindung beider Abschnitte des Verpressanzeigerings erfolgt zweckmäßigerweise durch radial verlaufende Stege. Diese Stege können entweder das axiale Ende der Presshülse umgreifen oder aber sie erstrecken sich durch in dem axialen Ende der Presshülse angeordnete zum axialen Ende der Presshülse hin offene Schlitze.

Der Verpressanzeigering kann in seinen beiden Abschnitten, die radial aufeinander folgen, jeweils ringförmig ausgebildet sein. Es reicht aber aus, wenn der Verpressanzeigering lediglich in seinem von der Presshülse aufgenommenen ersten Abschnitt ringförmig ist, während der zweite Abschnitt zwischen den radial nach außen über die Presshülse abstehenden Stegen unterbrochen ist, also lediglich aus den radial nach außen über die Presshülse überstehenden Abschnitten der Stege besteht. Innerhalb dieser überstehenden Abschnitte weist jeder Steg jeweils die oben angesprochene Schrägfläche auf, über die das Verpresswerkzeug die Stege axial abrückt und damit den ersten Abschnitt des Verpressanzeigerings, der zuvor von der Presshülse aufgenommen ist, freilegt.

Die Erfindung wird nachfolgend anhand diverser Ausführungsbeispiele und unter Bezugnahme auf die Zeichnung näher erläutert. Im Einzelnen zeigen dabei:
- Fig. 1: als Halbschnitt und in Explosionsdarstellung die einzelnen Teile des erfindungsgemäßen Pressfittings mit angedeutetem Rohranschlussende,
- Fig. 2: den erfindungsgemäßen Pressfitting im zusammengesetzten Zustand im Halbschnitt,
- Fig. 3: eine Ansicht auf den Anschlag- und Verpressanzeige-Kunststoffring entlang der Linie III-III der Fig. 1,
- Fig. 4: eine Ansicht auf den Anschlag- und Verpressanzeige-Kunststoffring entlang der Linie IV-IV der Fig. 1,
- Fig. 5: eine perspektivische Ansicht auf einen Kunststoffring, wie er bei dem Pressfitting gemäß Fign, 1 bis 4 Verwendung finden kann, mit den drei bei Verpressung des Pressfittings zerstörbaren Vorsprüngen,
- Fig. 6: einen Halbschnitt durch einen Pressfitting mit segmentiertem Verpressanzeigering vor der Verpressung,
- Fig. 7: einen Halbschnitt durch den Pressfitting gemäß Figur 6 mit zerteiltem Verpressanzeigering nach der Verpressung,
- Fig. 8: eine Draufsicht auf einen Verpressanzeigering gemäß einem weiteren Ausführungsbeispiel der Erfindung,
- Fig. 9: einen Halbschnitt durch eine Presshülse mit an dieser befestigtem Verpressanzeigering gemäß Fig. 8,
- Fig. 10: einen Halbschnitt durch ein weiteres Ausführungsbeispiel eines an einer Presshülse befindlichen Verpressanzeigerings mit angedeutetem Presswerkzeug im Zustand vor der Verpressung,
- Fig. 11: eine Draufsicht auf ein sechstes Ausführungsbeispiel eines Verpressanzeigerings für einen Pressfitting,
- Fig. 12: einen Schnitt durch eine Hülse mit an dieser befestigtem Verpressanzeigering gemäß Fig. 6 zur Erläuterung von dessen Funktion und mit angedeutetem Presswerkzeug,
- Fign. 13 und 14: zwei weitere Ausführungsbeispiele für einen Verpressanzeigering mit federnd vorspannbaren Ringsegmenten während der Verpressung,
- Fig. 15: einen Halbschnitt durch ein weiteres Ausführungsbeispiel eines Pressfittings mit in diesem Ausführungsbeispiel axial verschiebbarem Verpressanzeigering,
- Fig. 16: die Situation nach dem Verpressen des Pressfittings gemäß Fig. 15 mit axial von der Presshülse gelöstem Verpressanzeigering,
- Fig. 17: einen Halbschnitt durch ein weiteres Ausführungsbeispiel eines Pressfittings mit axial verschiebbarem Verpressanzeigering vor der Verpressung,
- Fig. 18: die Situation nach der Verpressung des Pressfittings gemäß Fig. 17 mit axial abgerücktem Verpressanzeigering und im Halbschnitt
- Fig. 19: einen Halbschnitt durch ein letztes Ausführungsbeispiel eines Pressfittings mit axial verschiebbarem Verpressanzeigering vor der Verpressung,
- Fig. 20: die Situation nach der Verpressung des Pressfittings gemäß Fig. 19 mit axial abgerücktem Verpressanzeigering und im Halbschnitt und
- Fig. 21: eine Ansicht auf den Verpressanzeigering des Ausführungsbeispiels gemäß den Fign. 19 und 20.

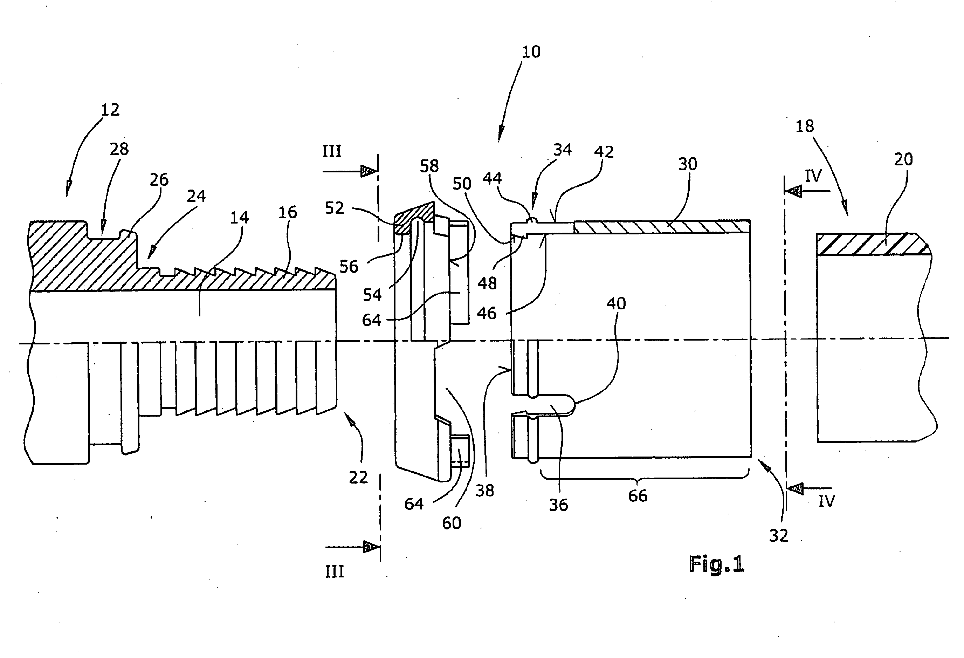

Gemäß Fign. 1 bis 3 weist der Pressfitting 10 einen Fittingkörper 12 auf, durch den hindurch sich ein Durchlass 14 erstreckt. Der Fittingkörper 12 ist mit einem abstehenden Stützkörper 16 versehen, auf den das Ende 18 eines anzuschließenden Rohres 20 aufgeschoben wird. Der Stützkörper 16 weist ein freies stirnseitiges Ende 22 sowie ein diesem gegenüberliegendes Ende 24 auf, in dessen Bereich der Fittingkörper 12 eine in Umfangsrichtung umlaufende Außenwulst 26 und eine dahinter angeordnete ebenfalls umlaufende außenliegende Umfangsvertiefung 28 aufweist. Diese Umfangsvertiefung 28 liegt auf der dem Stützkörper 16 abgewandten Seite des Außenwulstes 26.

An dem Fittingkörper 12 ist eine Presshülse 30 gehalten, die in diesem Ausführungsbeispiel aus Aluminium bzw. einer Aluminiumlegierung besteht. Diese Presshülse 30 weist ein mit dem freien Ende 22 des Stützkörpers 16 im wesentlichen fluchtendes stirnseitiges Ende 32 sowie ein diesem gegenüberliegendes Halteende 34 auf, an dem die Presshülse 30 mit dem Fittingkörper 12 verbunden ist, Das Halteende 34 ist mit in diesem Ausführungsbeispiel drei Randaussparungen 36 versehen, die zur Stirnseite 38 der Presshülse 30 offen sind. Die Randaussparungen 36, deren Anzahl grundsätzlich beliebig ist, sind als Langlöcher bzw. Schlitze ausgebildet und durch der Stirnseite 38 gegenüberliegende Begrenzungsrandabschnitte 40 begrenzt. An der Außenseite 42 der Presshülse 30 befindet sich an dessen Halteende 34 ein umlaufender von den Aussparungen 36 unterbrochener Außenwulst 44, während die Presshülse 30 an ihrer Innenseite 46 einen ebenfalls umlaufenden und durch die Aussparungen 36 unterbrochenen Innenvorsprung 48 aufweist. Der Innenvorsprung 48 weist eine Hakenform auf und ist mit einer konisch verlaufenden Schrägfläche 50 versehen.

Außen auf der Presshülse 30 befindet sich an deren Halteende 34 ein Kunststoffring 52, der eine Innennut 54 aufweist, in die der Außenwulst 44 der Presshülse 30 eingetaucht ist. Auf diese Weise ist der Kunststoffring 52 gegen axiale Bewegungen an der Presshülse 30 gesichert. Darüber hinaus weist der Kunststoffring 52 einen radial einwärts gerichteten Sicherungsvorsprung 56 auf, der im montierten Zustand des Kunststoffrings 52 in eine der Randaussparungen 36 der Presshülse 30 eintaucht.

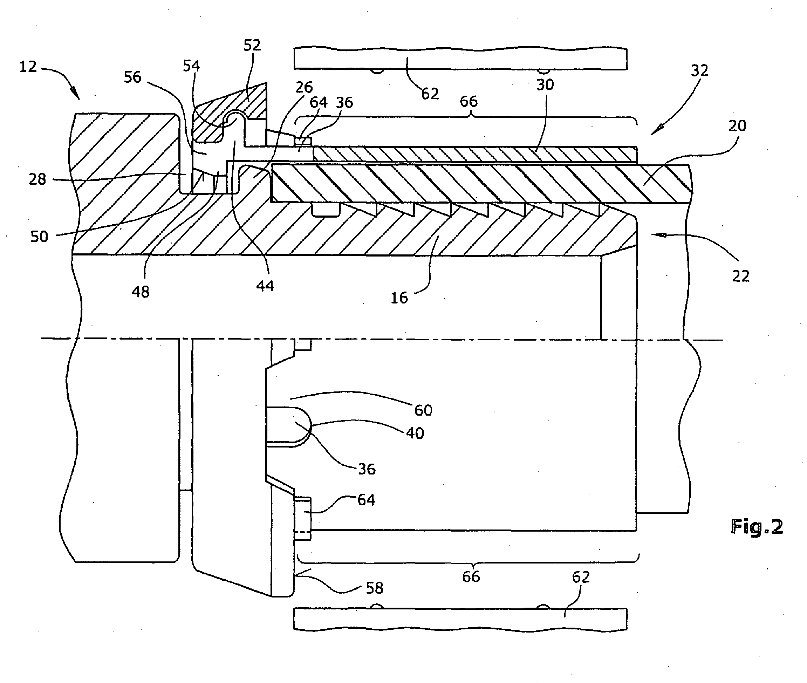

Wie man insbesondere anhand von Fig. 2 erkennen kann, weist der Kunststoffring 52 an seiner den Enden 22 und 32 von Stützkörper 16 bzw. Presshülse 30 zugewandten Seite 58 Aussparungen 60 auf, die mit den Randaussparungen 36 der Presshülse 30 fluchten. Durch diese Aussparungen 60 sind relativ große Bereiche der Randaussparungen 36 der Presshülse 30 freigelegt, so dass diese Bereiche der Randaussparungen 36 die Funktion von Lagekontrollöffnungen zur Überprüfung der ordnungsgemäßen Lage des anzuschließenden Rohres 20 bilden.

Die Montage von Fittingkörper 12, Presshülse 30 und Kunststoffring 52 ist wie folgt.

Zunächst wird der Kunststoffring 52 auf das Halteende 34 der Presshülse 30 aufgeschoben. Dabei kann der Kunststoffring 52 leicht vorgespannt sein, um die Montage und den Sitz auf der Presshülse zu erleichtern. Beim Aufschieben des Kunststoffringes 52 ist dieser so auszurichten, dass sein Sicherungsvorsprung 56 in eine der Randaussparungen 36 der Presshülse 30 eintaucht. Nach dem Aufschieben des Kunststoffringes 52 befindet sich die Außenwulst 44 der Presshülse 30 in der Innennut 54 des Kunststoffrings 52.

Anschließend wird die Presshülse 30 mitsamt dem Kunststoffring 52 über den Stützkörper 16 geschoben, bis die Schrägfläche 50 des Innenvorsprungs 48 der Presshülse 30 an dem Außenwulst 26 des Fittingkörpers 12 anliegt. Zur Fixierung der Presshülse 30 am Fittingkörper 12 wird diese weiter auf den Fittingkörper 12 geschoben, wobei die Aussparungen 36 eine Aufweitung des Halteendes 34 der Presshülse 30 erleichtern. Anschließend federt die Presshülse 30 an ihrem Halteende 34 wieder zurück, so dass der Innenvorsprung 48 in die außenliegende Umfangsvertiefung 28 des Fittingkörpers 12 eintaucht. Der Ftückfedereffekt wird durch den zuvor aufgesteckten Kunststoffring 52 deutlich verbessert und unterstützt, was insbesondere bei Verwendung vergleichsweise weicher metallischer Materialien für die Presshülse (beispielsweise Aluminium) gilt. Die kurzzeitig auftretenden Radialkräfte werden durch die Aussparungen 36 und den Kunststoffring 52 kompensiert, so dass der Außendurchmesser am Halteende 34 nach der Montage der Presshülse 30 nicht vergrößert ist. Im montierten Zustand sitzt die Presshülse 30 gegen axiale Ablösungen gesichert am Fittingkörper 12, kann aber dennoch relativ leicht verdreht werden.

Die Vorteile des erfindungsgemäßen Pressfittings lassen sich wie folgt zusammenfassen:
- Keine Deformation der Presshülse 30 nach der Montage auf den Fittingkörper 12.
- Die Presshülse 30 lässt sich nach ihrer Verbindung mit dem Fittingkörper 12 noch verdrehen.
- Die Randaussparungen 36 der Presshülse 30 sind trotz Anbringung des Kunststoffringes 52 noch gut einsehbar und somit als Lagekontrollöffnungen verwendbar.
- Der Kunststoffring 52 ist auch als Anschlagfläche oder sonstige Führung für das in Fig. 2 angedeutete Presswerkzeug 62 verwendbar (siehe die Anschlag- und Führungsfläche an der Seite 58 des Kunststoffringes 52 in Fig. 2).
- Der Kunststoffring 52 kann auch der galvanischen Trennung des Rohres 20 gegenüber dem Fittingkörper 12 dienen; hierzu bedarf es eines oder mehrerer Innenvorsprünge des Kunststoffringes 52, die durch die Randaussparungen 36 nach innen ragen und vom freien Ende 22 des Stützkörpers 16 aus betrachtet vor dem Außenwulst 26 des Fittingkörpers 12 liegen und somit den direkten Kontakt der Stirnfläche des Anschlussendes 18 des Rohres 20 mit dem Fittingkörper 12 verhindern.

Anhand der Fign. 1 bis 5 wird nachfolgend noch auf eine weitere Besonderheit des hier beschriebenen Pressfittings 10 eingegangen.

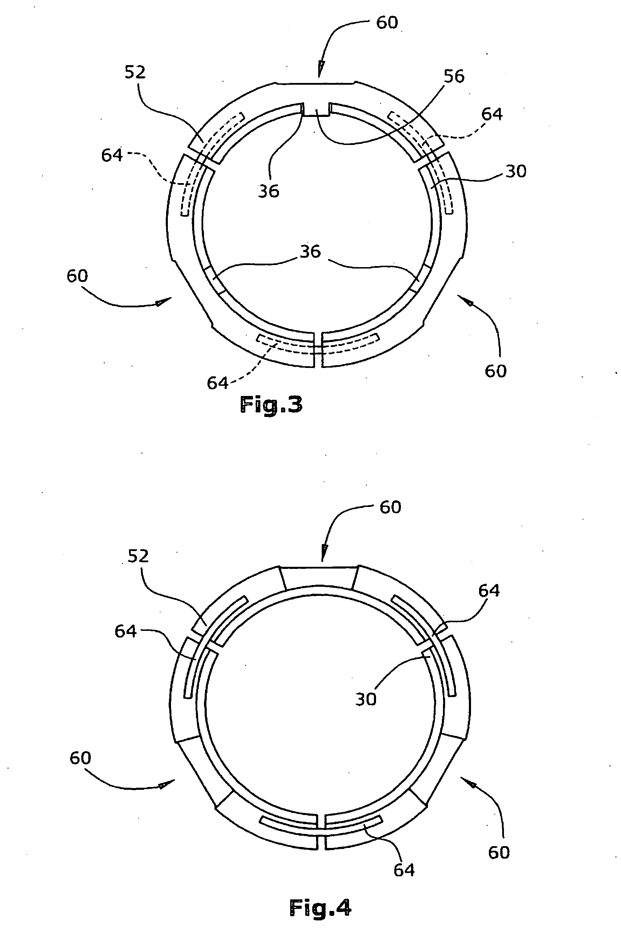

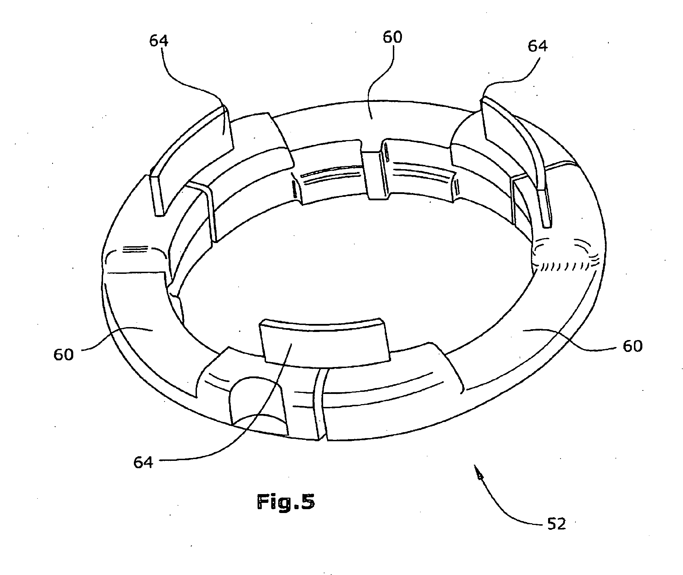

Wie insbesondere anhand der Fign. 1 und 2 zu erkennen ist, weist der Kunststoffring 52 an seiner (Stirn-)Seite 58 drei in Umfangrichtung versetzt gegeneinander angeordnete und voneinander beabstandete Verbindungsstege 64 auf, die die Umfangsfläche 63 der Presshülse 30 in deren sich an den Kunststoffring 52 anschließenden Verpressbereich 66 überragen. Die drei Verbindungsstege 64 befinden sich innerhalb derjenigen Bereiche des Kunststoffrings 52, die sich zwischen jeweils benachbarten Aussparungen 60 befinden. Die Fign. 4 und 5 zeigen diese Relativanordnung nochmals und verdeutlichen, dass der Kunststoffring 52 drei Ringsegmente 68,70,72 aufweist, die durch die Verbindungsstege 64 verbunden sind. Wie insbesondere anhand der Darstellung von Fig. 2 zu erkennen ist, befinden sich die Verbindungsstege 64 damit innerhalb des Verpressreichs 66, in dem das Presswerkzeug 62 beim Verpressen der Presshülse 30, also beim radialen Andrücken gegen die Presshülse 30 auf die Verbindungsstege 64 einwirken. Hierdurch scheren die Verbindungsstege 64 vom Kunststoffring 52 ab oder werden auf andere Art und Weise zerstört bzw. vom Kunststoffring 52 getrennt, so dass dessen Segmente nach erfolgter Verpressung von der Presshülse 30 abfallen, was das von weitem optische Anzeichen einer Verpressung ist. Längs der Verbindung der Verbindungsstege 64 mit dem Kunststoffring 52 können Sollbruchstellen angeordnet sein. Alternativ bzw, zusätzlich sind die Verbindungsstege 64 aus einem gegenüber dem Material des Kunststoffrings 52 wesentlich spröderen Material gefertigt. Kunststoffring 52 und Verbindungsstege 64 können insbesondere als zwei Komponenten-Kunststoffspritzgusswerkstück ausgebildet sein.

Der hier beschriebene Kunststoffring 52 vereinigt also mehrere Funktionen in sich. Zum einen dient er der Sicherung der Presshülse 30 an dem Stützkörper 16 des Fittingkörpers 12. Ferner dient er als Verpressanzeige, was im Rahmen dieser Erfindung das wesentliche Funktionsmerkmal ist. Schließlich übernimmt er über seine eine (Stirn-)Seite 58 eine Anschlag- und Führungsfunktion für das Presswerkzeug 62.

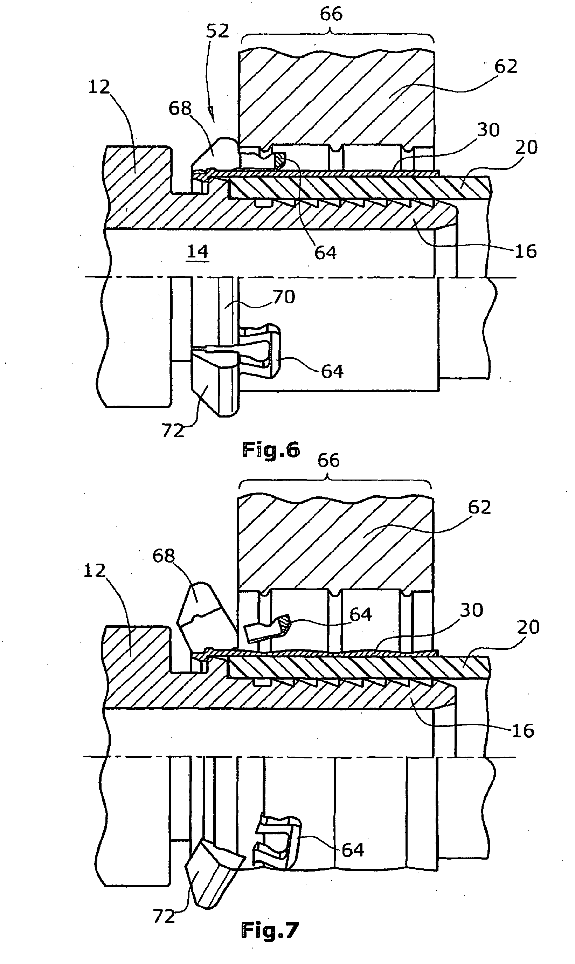

In den Fign. 6 bis 16 sind weitere Ausführungsbeispiele eines segmentierten Verpressanzeigerings gezeigt. Soweit die Einzelbestandteile der in diesen Figuren gezeigten Pressfittings in ihrer Konstruktion bzw. bezüglich Ihrer Funktion gleich bzw. ähnlich den in den Fign. 1 und 5 zu sehenden Bestandteilen sind, sind sie mit den gleichen Bezugszeigen versehen.

In den Fign. 6 und 7 ist ein drittes Ausführungsbeispiel eines Verpressanzeigeringes 52 gezeigt. Der Verpressanzeigering weist drei Ringsegmente 68,70,72 auf, die über U-förmige Verbindungsstege 64 miteinander verbunden sind. Der Verpressanzeigering 52 besteht aus Kunststoff und seine Ringsegmente 68,70 und 72 befinden sich außerhalb des Verpressbereichs, und zwar in diesem Ausführungsbeispiel außen an dem einen axialen Ende der Presshülse 30. Durch das Presswerkzeug 62, das auf die innerhalb des Verpressbereichs 66 angeordneten Verbindungsstege 64 einwirkt, werden diese (Verbindungs-) Stege 64 zerstört bzw. ihre Verbindung zu den Ringsegmenten 68,70,72 unterbrochen, so dass sich nach der Verpressung die Situation gemäß Fig. 7 ergibt, in der die einzelnen Bestandteile des Verpressanzeigerings 52 und insbesondere dessen Ringsegmente 68,70,72 sich von der Presshülse 30 lösen und damit eine von Weitem deutlich sichtbare Verpressanzeige liefern.

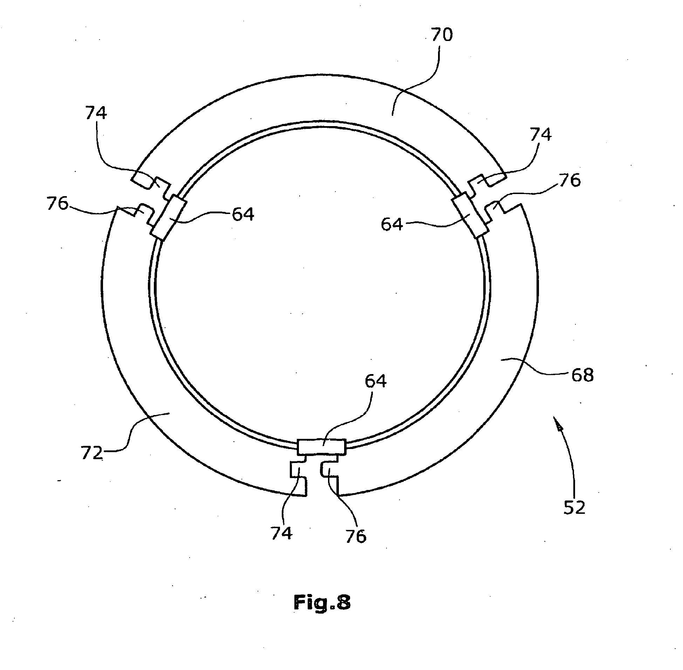

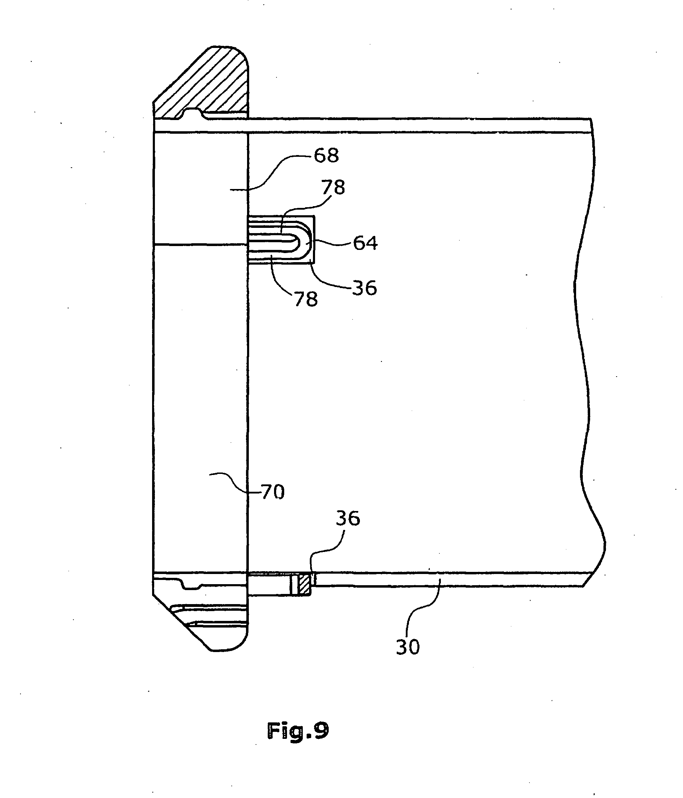

Die Fign. 8 und 9 zeigen ein weiteres Ausführungsbeispiel eines Verpressanzeigerings 52 gemäß der Erfindung. Die Ringsegmente 68,70,72 dieses Verpressanzeigerings 52 weisen an Ihren einander zugewandten und in Umfangsrichtung liegenden Enden Nuten 74 bzw. dem jeweils gegenüberliegenden Ende Vorsprünge 76 auf, zum Eintauchen in die Nuten 74. Durch dieses mechanische formschlüssige Ineinandergreifen der einzelnen Ringsegmente erfährt der Verpressanzeigering 52 im auf der Presshülse 30 aufgesetzten Zustand eine erhöhte Stabilität. Bei der Herstellung des Verpressanzeigerings 52 gemäß Fig. 8 als Spritzgussteil sollten die einzelnen Ringsegmente 68,70,72 so, wie in Fig. 8 gezeigt, voneinander beabstandet sein, damit die Konstruktion der Spritzgussform vereinfacht ist. Die Verbindung der einzelnen Segmente des Verpressanzeigerings 52 erfolgt über die Verbindungsstege 64. Diese Verbindungsstege 74 sind in diesem Ausführungsbeispiel im wesentlichen V-förmig (siehe Fig. 9) und werden in Randaussparungen 36 eingeschoben, so dass sich die Situation gemäß Fig. 9 ergibt. Im eingeschobenen Zustand liegen die Schenkel der V-förmigen Verbindungsstege 64 dicht aneinander, wodurch die Ringsegmente 68,70,72 zusammenrücken, wobei die Vorsprünge 76 in die Vertiefungen 74 eintauchen.

Wie man anhand von Fig. 9 erkennen kann, stehen die Schenkel 78 der Verbindungsstege 64 radial nach außen über die Presshülse 30 über, so dass sie, wie anhand der Fign. 6 und 7 beschrieben, von dem Presswerkzeug (in Fig. 9 nicht dargestellt) geschert und von den Ringsegmenten 68,70,72 abgetrennt werden, wodurch sich nach dem Verpressvorgang die Situation gemäß Fig. 7 ergibt, in der die Segmente 68,70,72 von der Presshülse 30 gelöst sind und ihr Nichtvorhandensein an der Presshülse 30 die Verpressanzeige bildet.

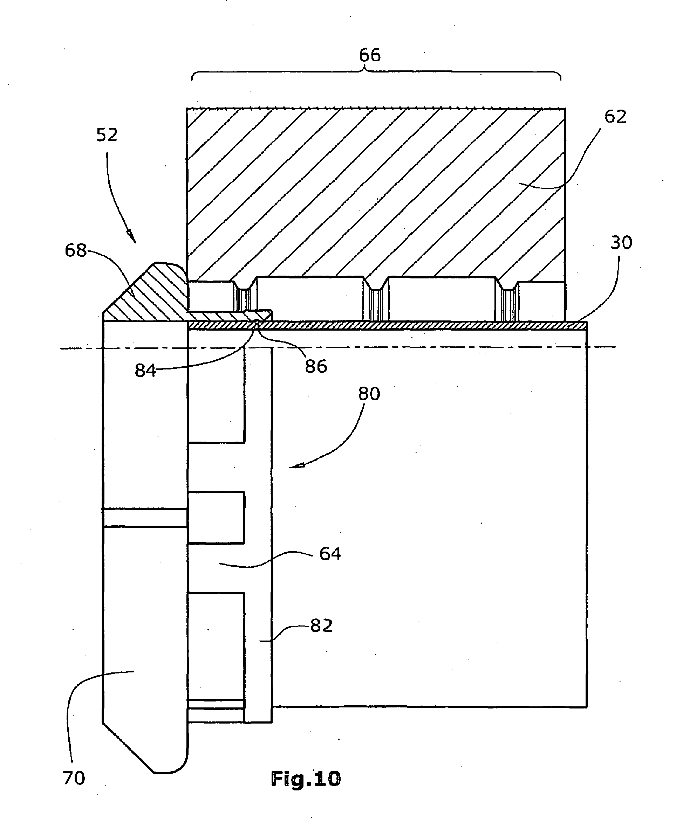

Fig. 10 zeigt eine weitere Variante eines Verpressanzeigerings 52. Die drei Ringsegment 68,70,72 sind über einen Kragen 80 miteinander verbunden, der sich innerhalb des Verpressbereichs 66 der Presshülse 30 erstreckt. Der Kragen weist im wesentlichen U-förmige Verbindungsstege 64 auf, die unter einander über in Umfangsrichtung verlaufende Umfangsstege 82 miteinander verbunden sind. An dem Umfangssteg 82 kann eine Umfangsvertiefung 84 angeordnet sein, in die ein Umfangsvorsprung 86 der Presshülse 30 eingreift. Durch die Verbindung der Verbindungsstege 64 untereinander erhält der Verpressanzeigering 52 gemäß Fig. 10 eine erhöhte Stabilität im an der Presshülse 30 angebrachten Zustand, was für die Handhabung der Presshülse 30 bei deren Montage an den Fitting bzw. auf das Rohr und bei der Handhabung des Fittings von Vorteil ist. Die Funktion bezüglich der Zerstörung der Verbindungsstrukturen zwischen den einzelnen Ringsegmenten 68,70,72 ist bei dem Verpressanzeigering 52 gemäß Fig. 10 identisch zu den Gegebenheiten, wie sie anhand der vorherigen Figuren beschrieben worden sind.

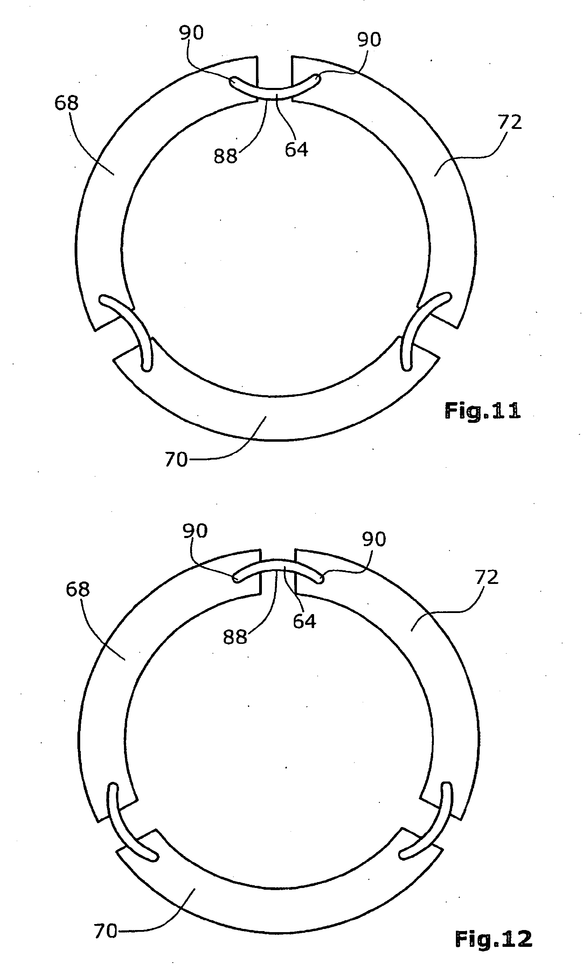

Die Fign. 11 und 12 zeigen zwei weitere Ausführungsbeispiele des Verpressanzeigerings 52. Bei diesen Ausführungsbeispielen sind die Ringsegmente 68,70,72 über bogenförmige Verbindungsstege miteinander verbunden, die, wenn sie, wie beim Verpressvorgang, Kontakt mit dem Presswerkzeug erfahren, sich strecken und dabei die Ringsegmente 68,70,72 radial auswärts vorspannen. Diese Federwirkung der Verbindungsstege 64 wird ausgenutzt, um das Abfallen der Ringsegmente 68,70,72 nach vollständiger Abscherung der Verbindungsstege 64 zu unterstützen. Die bogenförmige Ausbildung der Verbindungsstege 64 ist gekennzeichnet durch einen unterschiedlichen radialen Abstand des Scheitelpunktes 88 zur (in den Fign. 11 und 12 nicht gezeigten Presshülse) im Gegensatz zu dem radialen Abstand der Verbindungsstellen 90 der Verbindungsstege 64 mit den Ringsegmenten 68,70,72.

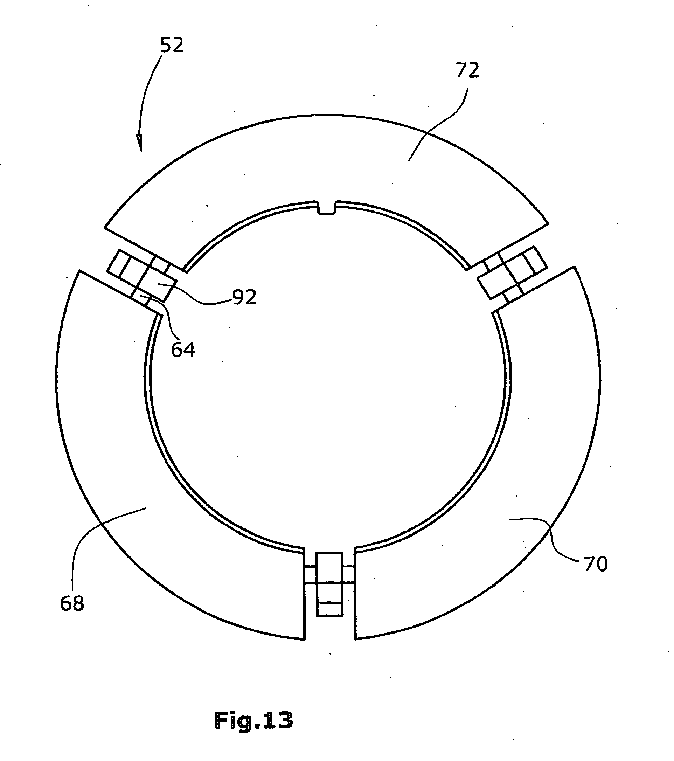

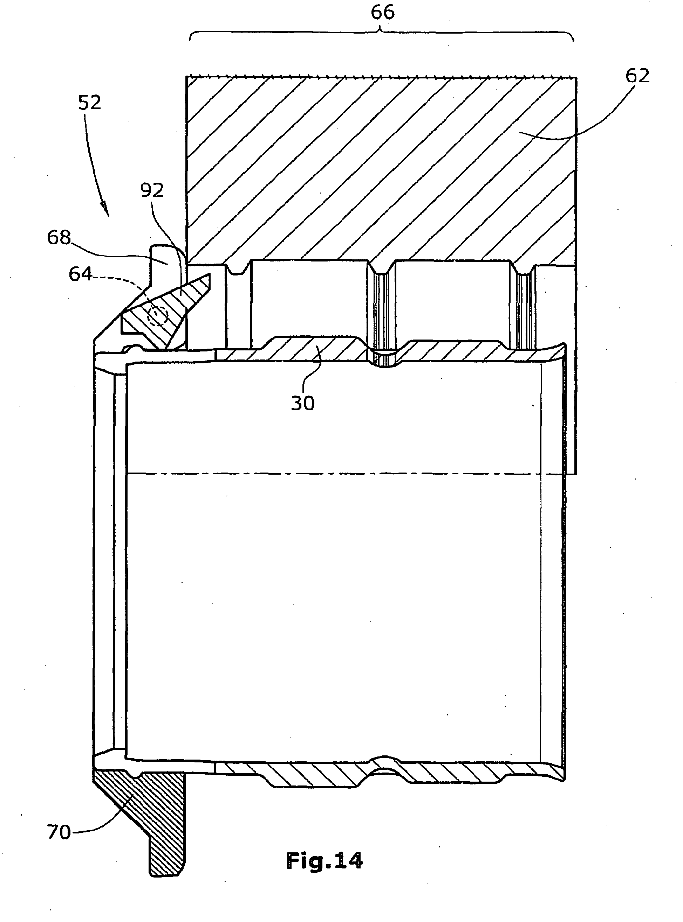

Fign. 13 und 14 zeigen ein weiteres Ausführungsbeispiel eines Verpressanzeigerings 52 mit alternativ ausgebildeten Verbindungsstegen 64, Diese Verbindungsstege 64 weisen, wie insbesondere anhand von Fig. 14 deutlich wird, einstückig angeformte Hebelelemente 92 auf, die teilweise bis in den Verpressbereich 66 hineinragen. Die Verbindungsstege 64 ihrerseits befinden sich wie die Ringsegmente 68,70,72 außerhalb des Verpressbereichs 66. Auf die Hebelelemente 92, die im Verpressbereich 66 einen radialen Abstand zur Presshülse 30 aufweisen, wirkt beim Verpressvorgang über das Presswerkzeug 62 ein Drehmoment, das zu einer Verdrehung der Hebelelemente 92 führt. Diese wiederum bewirkt eine Torsion in den Verbindungsstege. Die Tordierung der Verbindungsstege 64 fuhrt zu deren Auftrennung bzw. Abtrennung von den Ringsegmenten 68,70,72, wodurch der Verpresszustand durch den abgefallenen Verpressanzeigering 52 angezeigt ist.

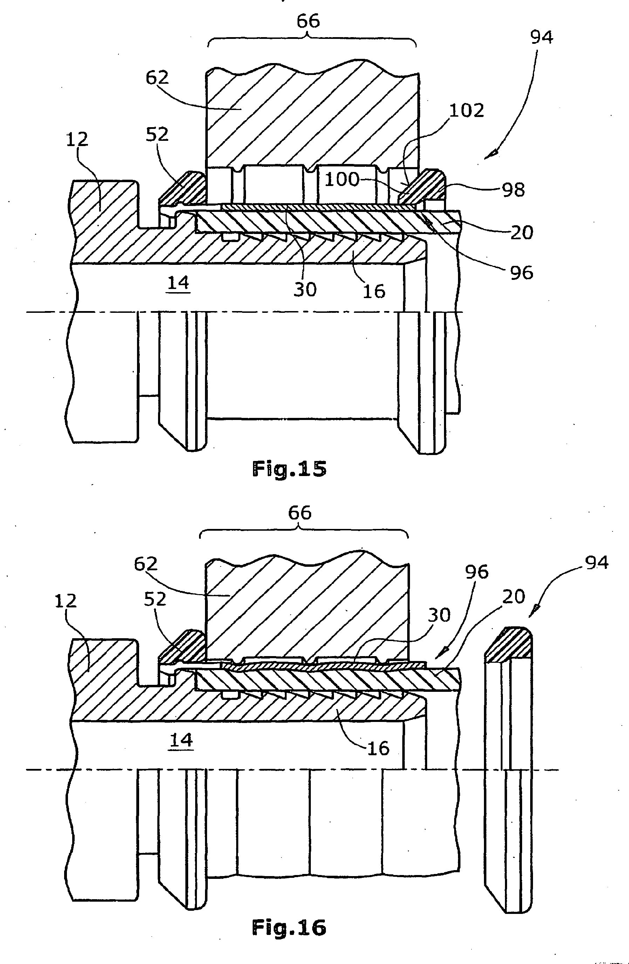

In den Fign. 15 bis 18 sind zwei letzte Ausführungsbeispiele für einen Verpressanzeigering 94 wiedergegeben, der im Unterschied zu den Verpressanzeigeringen 52 der anderen Ausführungsbeispiele unter Einwirkung des Presswerkzeuges 62 axial verschiebbar ist.

In dem Ausführungsbeispiel gemäß den Fign, 15 und 16 weist die Presshülse 30 zunächst einen herkömmlichen Anschlagring 52 auf, der in diesem Ausführungsbeispiel nicht als Verpressanzeige dient. Der Anschlagring 52 ist beispielsweise einstückig und einteilig ausgebildet und umgibt die Presshülse 30 so, wie anhand der Fign. 1 bis 3 beschrieben.

Am anderen axialen Ende 96 der Presshülse 30 befindet sich ein axial verschiebbarer Verpressanzeigering 94, der einen ersten Abschnitt 98 und einen einstückig mit diesem verbundenen zweiten Abschnitt 100 aufweist. Der erste Abschnitt 98 befindet sich außerhalb des Verpressbereichs 66, während der zweite Abschnitt 100 in den Verpressbereich 66 der Presshülse 30 hineinragt.

Innerhalb des zweiten Abschnitts 100 des Verpressanzeigerings 94 weist dieser eine außenliegende Schrägfläche 102 auf, über die der zweite Abschnitt 100 des Verpressanzeigerings sich in seiner Dicke reduziert.

Das Presswerkzeug 62 wirkt nun, wie in den Fign. 15 und 16 angedeutet, über die Schrägfläche 102 auf den Verpressanzeigering 94 ein. Durch die Schrägfläche 102 wird die radiale Bewegung des Presswerkzeugs 62 in Richtung auf die Presshülse 30 in eine axiale Bewegung des Verpressanzeigerings 94 umgesetzt. Dies führt, wie in Fig. 16 gezeigt, zum Ablösen des Verpressanzeigerings 94 von dem axialen Ende 96 der Presshülse 30, was die optische Anzeige für die erfolgte Verpressung bildet.

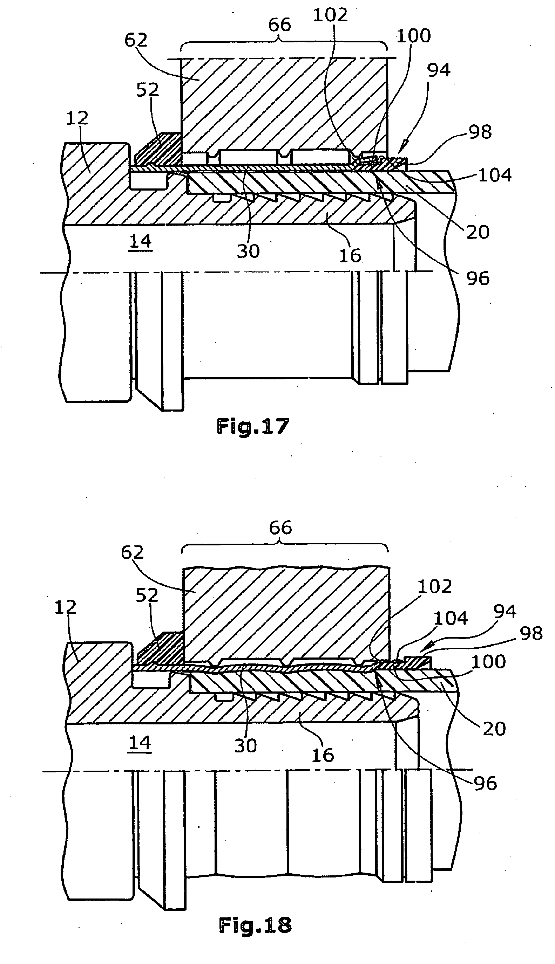

In den Fign. 17 und 18 ist eine alternative Ausgestaltung zu dem Ausführungsbeispiel gemäß den Fign. 15 und 16 gezeigt. Hier ist der Verpressanzeigering 94 von dem axialen Ende 96 der Presshülse 30 aufgenommen, wozu diese axiale Ende 96 aufgeweitet ist. Das Presswerkzeug 62 wirkt auf das aufgeweitete Ende und insbesondere auf den schräg verlaufenden Aufweitungsabschnitt, wodurch nach dem gleichen Prinzip wie im Ausführungsbeispiel gemäß den Fign. 15 und 16 der Verpressanzeigering 94 axial ausrückt. In diesem Ausführungsbeispiel wird der Verpressanzeigering 94 auch nach der Verpressung noch von dem Ende 96 der Presshülse 30 gehalten. Mit 104 ist in den Fign. 17 und 18 eine beispielsweise Farbmarkierung des Verpresskennzeichnungsrings 94 bezeichnet, die im verpressten Zustand gemäß Fig. 18 von außen sichtbar ist, während sie im unverpressten Zustand gemäß Fig. 17 von der Presshülse 30 abgedeckt ist.

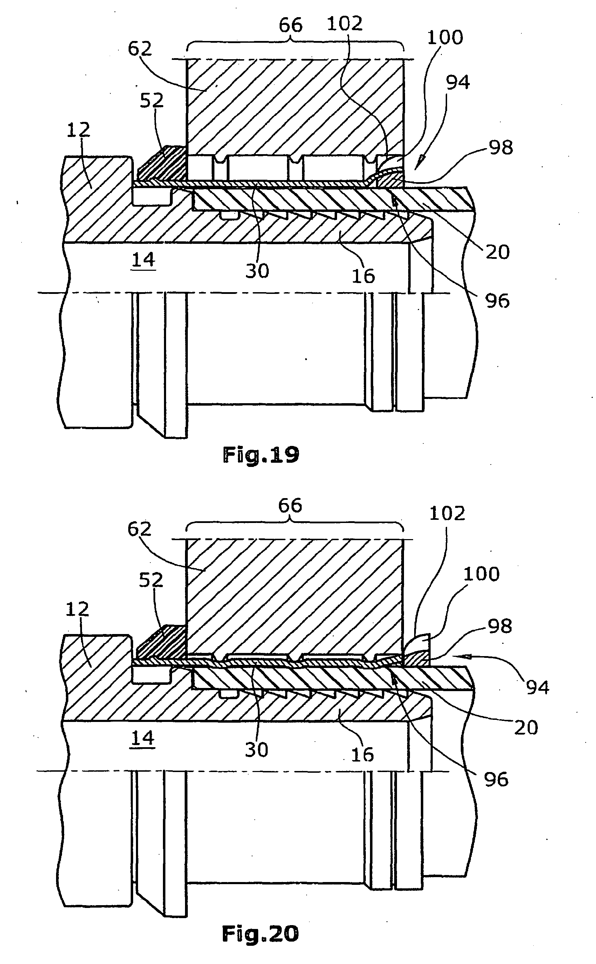

In den Fign. 19 bis 21 ist ein weiteres Ausführungsbeispiel eines Pressfittings mit Verpressanzeigering gezeigt. Sofern die Elemente dieses Fittings mit den in den Fign. 17 und 18 gezeigten Elementen konstruktiv oder funktional gleich sind, sind sie mit den gleichen Bezugszeichen versehen.

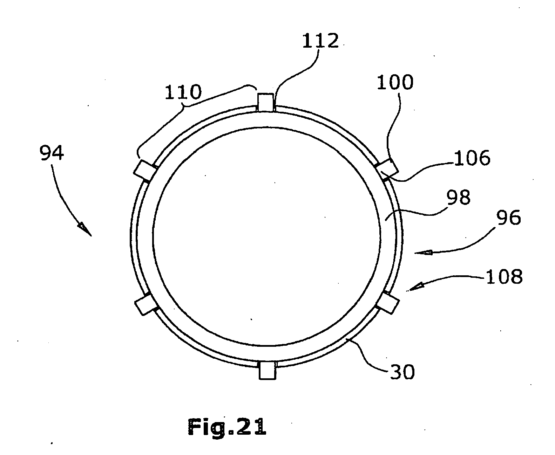

Der Fitting der Fign. 19 bis 21 weist einen Verpressanzeigering 94 auf, der im wesentlichen eine Kombination der Verpressanzeigeringe 94 der Ausführungsbeispiele der Fign. 15, 16 und 17, 18 darstellt. Die beiden Abschnitte 98 und 100 sind nicht mehr axial nebeneinander liegend, sondern radial und damit konzentrisch angeordnet. Der erste Abschnitt 98 befindet sich innerhalb des aufgeweiteten axialen Endes 96 der Presshülse 30, während der zweite Abschnitt 100 außen auf das aufgeweitete axiale Ende 96 der Presshülse 30 aufgeschoben ist. Das Presswerkzeug 62 arbeitet mit der im zweiten Abschnitt 100 des Verpressanzeigerings 94 ausgebildeten Schrägfläche 102 zusammen und verrückt den Verpressanzeigering 94 axial, was in Fig. 20 zu erkennen ist. Dabei wird dann auch das aufgeweitete axiale Ende 96 der Presshülse 30 durch das Presswerkzeug 62 gegen das zu fixierende Rohr 20 gedrückt. In Fig. 21 ist zu erkennen, dass von dem innenliegenden ersten Abschnitt 98 des Verpressanzeigerings 94 radial ausgerichtete Verbindungsstege 106 verlaufen, die über die Hülse 30 bzw. deren axiales Ende 96 radial überstehen und in diesen überstehenden Bereichen 108 den zweiten Abschnitt 100 des Verpressanzeigerings bilden. In den Bereichen 110 zwischen benachbarten überstehenden Bereichen 108 ist der zweite Abschnitt 100 also unterbrochen. Die Stege 106 verlaufen, wie Fig. 21 zu entnehmen ist, innerhalb von in das aufgeweitete axiale Ende 96 der Presshülse 30 eingebrachte Aufnahmestege 112. Alternativ ist es möglich, dass die Stege 106 das axiale Ende 96 der Presshülse 30 umgreifen.

## Patentansprüche

1. Pressfitting für ein Rohr, insbesondere ein Kunststoffrohr oder Rohr aus einem Kunststoff-Metall-Verbundwerkstoff mit
- einem Fittingkörper (12), der einen Stützkörper (16) aufweist, auf den ein anzuschließendes Rohr (20) aufschiebbar ist,
- einer Presshülse (30), die einen Verpressbereich (66) aufweist, in welchem bei Verpressung der Presshülse (30) auf diese ein Presswerkzeug (62) einwirkt, und
- einem Verpressanzeigering (52), der an der.Presshülse (30) gehalten ist,
**dadurch gekennzeichnet,**
- **dass** der Verpressanzeigering (52) mehrere Ringsegmente (68,70,72) aufweist, wobei einander zugewandte Enden benachbarter Ringsegmente (68,70,72) untereinander durch zerstörbare oder von den Ringsegmenten (68,70,72) trennbare Verbindungsstege (64) verbunden sind, und
- **dass** der Verpressanzeigering (52) derart an der Presshülse (30) angeordnet ist, dass sich die Ringsegmente (68,70,72) außerhalb des Verpressbereichs (66) der Presshülse (30) befinden und sich die Verbindungsstege (64) und/oder von diesen abzweigende Teile (92) bis in den Verpressbereich (66) der Presshülse (30) hinein erstrecken.

2. Pressfitting nach Anspruch 1, **dadurch gekennzeichnet, dass** die Verbindungsstege (64) Sollbruchstellen aufweisen oder die Verbindungsstellen der Verbindungsstege (64) mit den Ringsegmenten (68,70,72) als Sollbruchstellen ausgebildet sind.

3. Pressfitting nach Anspruch 1 oder 2, **dadurch gekennzeichnet, dass** die Verbindungsstege (64) im wesentlichen als U förmige Bügel ausgebildet sind, die außen an der Presshülse (30) anliegen oder im Abstand zu dieser verlaufen.

4. Pressfitting nach Anspruch 1 oder 2, **dadurch gekennzeichnet, dass** die Verbindungsstege (64) als sich in Umfangsrichtung der Presshülse (30) erstreckend ausgebildet sind, wobei die Verbindungsstellen (90) der Verbindungsstege (64) mit den Ringsegmenten (68,70,72) und ein zwischen den Verbindungsstellen (90) der Verbindungsstege (64) angeordneter Abschnitt (88) der Verbindungsstege (64) unterschiedliche radiale Abstände zur Presshülse (30) aufweisen.

5. Pressfitting nach Anspruch 4, **dadurch gekennzeichnet, dass** die Verbindungsstege (64) im wesentlichen trapez- oder bogenförmig sind und einen Scheitelbereich (88) aufweisen, dessen radialer Abstand zur Presshülse (30) größer ist als an den Verbindungsstellen (90) der Verbindungsstege (64) mit den Ringsegmenten (68,70,72).

6. Pressfitting nach Anspruch 1 oder 2, **dadurch gekennzeichnet, dass** sich die Verbindungsstege (64) außerhalb des Verpressbereichs (66) der Presshülse (30) befinden, das von jedem (Verbindungs-)Steg (64) ein Hebelelement (92) absteht, das sich bis in den Verpressbereich (66) der Presshülse (30) und mit radialem Abstand zu dieser erstreckt und dass das Presswerkzeug (62) beim Verpressen auf die Hebelelemente (92) einwirkt und diese unter Torsion und damit verbundener Auftrennung der mit den Hebelelementen (92) verbundenen Verbindungsstegen (64) oder Abtrennung derselben von den Ringsegmenten (68,70,72) des Verpressanzeigerings (52) verschwenkt.

7. Pressfitting nach einem der Ansprüche 1 bis 6, **dadurch gekennzeichnet, dass** die Ringsegmente (68,70,72) des Verpressanzeigerings (52) unter radialer Vorspannung an der Presshülse (30) anliegen.

8. Pressfitting für ein Rohr, insbesondere ein Kunststoffrohr oder Rohr aus einem Kunststoff-Metall-Verbundwerkstoff mit
- einem Fittingkörper (12), der einen Stützkörper (16) aufweist, auf den ein anzuschließendes Rohr (20) aufschiebbar ist,
- einer Presshülse (30), die einen Verpressbereich (66) aufweist, in welchem bei Verpressung der Presshülse (30) auf diese ein Presswerkzeug (62) einwirkt, und
- einem Verpressanzeigering (94), der an der Presshülse (30) gehalten ist,
**dadurch gekennzeichnet,**
- **dass** der Verpressanzeigering (94) einen ersten Abschnitt (98) und einen bis in den Verpressbereich (66) hineinragenden zweiten Abschnitt (100) aufweist,
- **dass** der zweite Abschnitt (100) eine Außenschrägfläche (102) aufweist, entlang derer sich der Verpressanzeigering (94) innerhalb seines zweiten Abschnitts (100) zu seinem von diesem gebildeten axialen Ende hin verjüngt, und
- **dass** die Schrägfläche (102) des Verpressanzeigerings (94) zum Zusammenwirken mit dem Presswerkzeug (62) dergestalt vorgesehen ist, dass das Presswerkzeug (62) den Verpressanzeigering (94) beim Verpressen der Presshülse (30) relativ zu dieser aus einer Ausgangsposition in eine Verpressanzeigeposition axial verschiebt.

9. Pressfitting nach Anspruch 8, **dadurch gekennzeichnet, dass** der zweite Abschnitt (100) des Verpressanzeigerings (94) außen an der Presshülse (30) und der erste Abschnitt (98) außerhalb des Verpressbereichs (66) und/oder von der Presshülse (30) abstehend angeordnet ist.

10. Pressfitting nach Anspruch 8 oder 9, **dadurch gekennzeichnet, dass** die Presshülse (30) an ihrer Außenseite eine von dem Verpressanzeigering (94) in dessen Ausgangsposition verdeckte Markierung (104) aufweist, die bei in der Verpressanzeigeposition befindlichem Pressanzeigering (94) frei liegt.

11. Pressfitting nach Anspruch 8 oder 9, **dadurch gekennzeichnet, dass** der erste axiale Abschnitt (98) des Verpressanzeigerings (94) von einem axialen Ende (96) der Presshülse (30) absteht und dass der zweite Abschnitt (100) des Verpressanzeigerings (94) an dem axialen Ende (96) der Presshülse (30) von dieser aufgenommen ist.

12. Pressfitting nach Anspruch 11, **dadurch gekennzeichnet, dass** der Verpressanzeigering (94) innerhalb seines von dem axialen Ende (96) der Presshülse (30) aufgenommenen Bereichs eine von der Presshülse (30) in der Ausgangsposition des Verpressanzeigerings (94) verdeckte Markierung (104) aufweist, die bei in der Verpressanzeigeposition befindlichem Verpressanzeigering (94) außerhalb der Presshülse (30) positioniert ist.

13. Pressfitting nach Anspruch 8, **dadurch gekennzeichnet, dass** der zweite Abschnitt (100) des Verpressanzeigerings (94) außen an einem axialen Ende (96) der Presshülse (30) angeordnet ist, dass der erste Abschnitt (98) des Verpressanzeigerings (94) von dem axialen Ende (96) der Presshülse (30) aufgenommen ist und dass beide Abschnitte (98,100) des Verpressanzeigerings (94) im wesentlichen konzentrisch zueinander sowie unter Zwischenschaltung des axialen Endes (96) der Presshülse (30) angeordnet sind.

14. Pressfitting nach Anspruch 13, **dadurch gekennzeichnet, dass** beide Abschnitte (98,100) des Verpressanzeigerings (94) durch radial verlaufende Stege (106) miteinander verbunden sind.

15. Pressfitting nach Anspruch 14, **dadurch gekennzeichnet, dass** die Stege (106) das axiale Ende (96) der Presshülse (30) umgreifen oder sich durch in dem axialen Ende (96) der Presshülse (30) angeordnete offene Schlitze (112) hindurch erstrecken.

16. Pressfitting nach Anspruch 14 oder 15, **dadurch gekennzeichnet, dass** der zweite Abschnitt (100) des Verpressanzeigerings (94) in den Umfangsbereichen (110) zwischen den radial über die Presshülse (30) überstehenden Bereichen (108) der Stege (106) unterbrochen ist.

17. Pressfitting nach einem der Ansprüche 8 bis 16, **dadurch gekennzeichnet, dass** der Verpressanzeigering (94) in seiner Verpressanzeigeposition axial von der Presshülse (30) wegbewegt ist.

18. Pressfitting nach einem der Ansprüche 1 bis 17, **dadurch gekennzeichnet, dass** der Fittingkörper (12) und/oder die Presshülse (30) eine Führungsfläche zur radialen Führung des Presswerkzeuges (62) beim Verpressen aufweist.

19. Verfahren zum Verpressen eines Pressfittings nach einem der Ansprüche 1 bis 7, bei dem
- mittels eines Presswerkzeuges (62) auf den Verpressbereich (66) der Presshülse (30) des Pressfittings (10) zum Verpressen desselben eingewirkt wird und dabei die Verbindungsstege (64) zerstört und/oder von den Ringsegmenten (68,70,72) des Verpressanzeigerings (52) getrennt werden, so dass zur Anzeige des Verpresszustandes des Pressfittings (10) die Ringsegmente (68,70,72) voneinander getrennt werden und von der Presshülse (30) abfallen.

20. Verfahren zum Verpressen eines Pressfittings nach einem der Ansprüche 8 bis 18, bei dem
- mittels eines Presswerkzeuges (62) auf den Verpressbereich (66) der Presshülse (30) des Pressfittings (10) zum Verpressen desselben sowie auf die Schrägfläche (102) des Verpressanzeigerings (94) zwecks axialer Verschiebung desselben zur Anzeige des Verpresszustandes des Pressfittings (10) eingewirkt wird.

## Claims

1. A press fitting for a tube, particularly for a plastic tube or a tube made of a plastic/metal compound material, comprising
- a fitting body (12) comprising a support body (16) configured to receive a tube (20) to be connected,
- a press shell (30) comprising a press-on region (66) where a pressing tool (62) will act on the press shell (30) when the press shell (30) is being pressed into place, and
- a press-indication ring (52) held on the press shell (30),
**characterized in**
- **that** the press-indication ring (52) comprises a plurality of ring segments (68,70,72), with mutually confronting ends of adjacent ring segments (68,70,72) being connected to each other by connection webs (64) adapted to be destroyed or to be detached from the ring segments (68,70,72), and
- **that** the press-indication ring (52) is arranged on the press shell (30) in such a manner that the ring segments (68,70,72) are located outside the press-on region (66) of the press shell (30) and that the connection webs (64) and/or portions (92) branching therefrom extend into the press-on region (66) of the press shell (30).

2. The press fitting according to claim 1, **characterized in that** the connection webs (64) include predetermined weakening zones, or the connection sites connecting the connection webs (64) with the ring segments (68,70, 72) are formed as predetermined weakening zones.

3. The press fitting according to claim 1 or 2, **characterized in that** the connection webs (64) are substantially formed as U-shaped brackets externally abutting the press shell (30) or extending at a distance therefrom.

4. The press fitting according to claim 1 or 2, **characterized in that** the connection webs (64) are formed to extend in the circumferential direction of the press shell (30), and that the connection sites (90) connecting the connection webs (64) with the ring segments (68,70,72) and a portion (88) of the connection webs (64) which is arranged between the connection sites (90) of the connection webs (64) have different radial distances from the press shell (30).

5. The press fitting according to claim 4, **characterized in that** the connection webs (64) are substantially trapezoidal or arched and comprise a vertex region (88) whose radial distance from the press shell (30) is larger than at the connection sites (90) connecting the connection webs (64) with the ring segments (68,70,72).

6. The press fitting according to claim 1 or 2, **characterized in that** the connection webs (64) are arranged outside the press-on region (66) of the press shell (30), that each (connection) web (64) has a lever element (92) projecting therefrom which extends into the press-on region (66) of the press shell (30) and at a radial distance therefrom, and that, during the press-on process, the pressing tool (62) will act on the lever elements (92) and will pivot them under torsion with resultant separation of the connection webs (64) connected to the lever element (92), or with resultant detachment of the connection webs (64) from the ring segments (68,70,72) of the press-indication ring (52).

7. The press fitting according to any one of claims 1 to 6, **characterized in that** the ring segments (68,70,72) of the press-indication ring (52) are in abutment on the press shell (30) with radial bias.

8. A press fitting for a tube, particularly for a plastic tube or a tube made of a plastic/metal compound material, comprising
- a fitting body (12) comprising a support body (16) configured to receive a tube (20) to be connected,
- a press shell (30) comprising a press-on region (66) where a pressing tool (62) will act on the press shell (30) when the press shell (30) is being pressed into place, and
- a press-indication ring (94) held on the press shell (30),
**characterized in**
- **that** the press-indication ring (94) comprises a first portion (98) and a second portion (100), with the second portion (100) extending into the press-on region (66),
- **that** the second portion (100) comprises an external oblique surface (102) along which the press-indication ring (94) within its second portion (100) is tapered toward the axial end formed by the second portion (100), and
- **that** the oblique surface (102) of the press-indication ring (94) is provided for cooperation with the pressing tool (62) to the effect that, when the press shell (30) is being pressed into place, the pressing tool (62) will axially displace the press-indication ring (94) relative to the press shell (30) from a starting position into a press-indication position.

9. The press fitting according to claim 8, **characterized in that** the second portion (100) of the press-indication ring (94) is arranged externally on the press shell (30) and the first portion (98) is arranged outside the press-on region (66) and/or extends from the press shell (30).

10. The press fitting according to claim 8 or 9, **characterized in that** the press shell (30) on its outer side is provided with a marking (104) which is shielded by the press-indication ring (94) in the starting position of the ring and is exposed when the press-indication ring (94) is in its press-indication position.

11. The press fitting according to claim 8 or 9, **characterized in that** the first axial portion (98) of the press-indication ring (94) extends from an axial end (96) of the press shell (30) and that the second portion (100) of the press-indication ring (94) is received by the press shell (30) on the axial end (96) of the press shell (30).

12. The press fitting according to claim 11, **characterized in that** the press-indication ring (94) in its region received by the axial end (96) of the press shell (30) is provided with a marking (104) which is shielded by the press shell (30) in the starting position of the press-indication ring (94) and which is positioned outside the press shell (30) when the press-indication ring (94) is in its press-indication position.

13. The press fitting according to claim 8, **characterized in that** the second portion (100) of the press-indication ring (94) is arranged externally on an axial end (96) of the press shell (30), that the first portion (98) of the press-indication ring (94) is received by the axial end (96) of the press shell (30), and that both portions (98,100) of the press-indication ring (94) are arranged substantially concentrically with each other and with interposition of the axial end (96) of the press shell (30).

14. The press fitting according to claim 13, **characterized in that** both portions (98,100) of the press-indication ring (94) are connected to each other by radially extending webs (106).

15. The press fitting according to claim 14, **characterized in that** the webs (106) grip around the axial end (96) of the press shell (30) or extend through open slits (112) formed in the axial end (96) of the press shell (30).

16. The press fitting according to claim 14 or 15, **characterized in that** the second portion (100) of the press-indication ring (94) is interrupted in the circumferential regions (110) between the portions (108) of the webs (106) radially extending beyond the press shell (30).

17. The press fitting according to any one of claims 8 to 16, **characterized in that** the press-indication ring (94), when in its press-indication position, is located axially away from the press shell (30).

18. The press fitting according to any one of claims 1 to 17, **characterized in that** the fitting body (12) and/or the press shell (30) comprise a guide face for radial guidance of the pressing tool (62) during the press-on process.

19. A method for pressing a press fitting according to any one of claims 1 to 7, wherein
- by means of a pressing tool (62), the press-on region (66) of the press shell (30) of the press fitting (10) is acted on for pressing the same into place and, in the process, the connection webs (64) are destroyed and/or detached from the ring segments (68,70,72) of the press-indication ring (52) so that, for indicating the press-on condition of the press fitting (10), the ring segments (68,70,72) will be separated from each other and fall off from the press shell (30).

20. A method for pressing a press fitting according to any one of claims 8 to 18, wherein
- by means of a pressing tool (62), the press-on region (66) of the press shell (30) of the press fitting (10) is acted on for pressing the same into place, and the oblique surface (102) of the press-indication ring (94) is acted on to axially displace the same for indicating the press-on condition of the press fitting (10).

## Revendications

1. Raccord à sertir pour un tuyau, en particulier un tuyau en matière plastique ou un tuyau en un matériau composite constitué de matière plastique et de métal, comprenant
- un corps de raccord (12), qui présente un corps d'appui (16), sur lequel un tuyau (20) à raccorder peut être emmanché,
- une douille de sertissage (30), qui présente une zone de compression (66), dans laquelle un outil de sertissage (62), lors de la compression de la douille de sertissage (30), agit sur cette dernière, et
- un anneau indicateur de sertissage (52), qui est retenu sur la douille de sertissage (30),
**caractérisé**
- **en ce que** l'anneau indicateur de sertissage (52) présente plusieurs segments d'anneau (68, 70, 72), des extrémités, tournées l'une vers l'autre, de segments d'anneau (68, 70, 72) adjacents étant alors reliées entre elles par des brides de liaison (64) destructibles ou séparables des segments d'anneau (68, 70, 72), et
- **en ce que** l'anneau indicateur de sertissage (52) est disposé d'une manière telle, sur la douille de sertissage (30), que les segments d'anneau (68, 70, 72) se trouvent à l'extérieur de la zone de compression (66) de la douille de sertissage (30) et que les brides de liaison (64) et/ou des parties (92) dérivant de celles-ci, s'étendent jusque dans la zone de compression (66) de la douille de sertissage (30).

2. Raccord à sertir selon la revendication 1, **caractérisé en ce que** les brides de liaison (64) présentent des points destinés à la rupture ou les points de liaison des brides de liaison (64) aux segments d'anneau (68, 70, 72) sont aménagés en points destinés à la rupture.

3. Raccord à sertir selon la revendication 1 ou 2, **caractérisé en ce que** les brides de liaison (64) sont conçues sensiblement comme des attaches en forme de U, qui portent extérieurement contre la douille de sertissage (30) ou se tiennent à distance de cette dernière.

4. Raccord à sertir selon la revendication 1 ou 2, **caractérisé en ce que** les brides de liaison (64) sont dotées d'une configuration les faisant s'étendre dans la direction circonférentielle de la douille de sertissage (30), les points de liaison (90) des brides de liaison (64) aux segments d'anneau (68, 70, 72) et un tronçon (88) des brides de liaison (64) disposé entre les points de liaison (90) des brides de liaison (64), présentant alors des espacements radiaux différents vis-à-vis de la douille de sertissage (30).

5. Raccord à sertir selon la revendication 4, **caractérisé en ce que** les brides de liaison (64) sont d'une forme sensiblement trapézoïdale ou arquée et présentent une zone sommitale (88), dont l'espacement radial vis-à-vis de la douille de sertissage (30) est plus grand qu'au niveau des points de liaison (90) des brides de liaison (64) aux segments d'anneau (68, 70, 72).

6. Raccord à sertir selon la revendication 1 ou 2, **caractérisé en ce que** les brides de liaison (64) se trouvent à l'extérieur de la zone de compression (66) de la douille de sertissage (30), **en ce que** de chaque bride (de liaison) (64) se dresse un élément de levier (92), qui s'étend jusque dans la zone de compression (66) de la douille de sertissage (30) et avec un espacement radial vis-à-vis de celle-ci, et **en ce que** l'outil de sertissage (62), lors de la compression, agit sur les éléments de levier (92) et les fait pivoter en provoquant une torsion et une séparation, liée à celle-ci, des brides de liaison (64) reliées aux éléments de levier (92) ou un détachement de ces dernières des segments d'anneau (68, 70, 72) de l'anneau indicateur de sertissage (52).

7. Raccord à sertir selon l'une des revendications 1 à 6, **caractérisé en ce que** les segments d'anneau (68, 70, 72) de l'anneau indicateur de sertissage (52) portent contre la douille de sertissage (30) sous précontrainte radiale.

8. Raccord à sertir pour un tuyau, en particulier un tuyau en matière plastique ou un tuyau en un matériau composite constitué de matière plastique et de métal, comprenant
- un corps de raccord (12), qui présente un corps d'appui (16), sur lequel un tuyau (20) à raccorder peut être emmanché,
- une douille de sertissage (30), qui présente une zone de compression (66), dans laquelle un outil de sertissage (62), lors de la compression de la douille de sertissage (30), agit sur cette dernière, et
- un anneau indicateur de sertissage (52), qui est retenu sur la douille de sertissage (30),
**caractérisé**
- **en ce que** l'anneau indicateur de sertissage (94) présente un premier tronçon (98) et un deuxième tronçon (100) faisant saillie jusque dans la zone de compression (66),
- **en ce que** le deuxième tronçon (100) présente une surface inclinée extérieure (102), le long de laquelle l'anneau indicateur de sertissage (94) se rétrécit à l'intérieur de son deuxième tronçon (100), vers son extrémité axiale formée par ce dernier, et
- **en ce que** la surface inclinée (102) de l'anneau indicateur de sertissage (94) est destinée à coopérer avec l'outil de sertissage (62) de telle manière que l'outil de sertissage (62), lors de la compression de la douille de sertissage (30), déplace axialement en translation l'anneau indicateur de sertissage (94) par rapport à cette dernière, d'une position initiale jusque dans une position d'indication de sertissage.

9. Raccord à sertir selon la revendication 8, **caractérisé en ce que** le deuxième tronçon (100) de l'anneau indicateur de sertissage (94) est disposé extérieurement contre la douille de sertissage (30) et le premier tronçon (98) est disposé à l'extérieur de la zone de compression (66) et/ou à distance de la douille de sertissage (30).

10. Raccord à sertir selon la revendication 8 ou 9, **caractérisé en ce que** la douille de sertissage (30) présente, sur sa face extérieure, un repère (104) masqué par l'anneau indicateur de sertissage (94), dans sa position initiale, lequel repère est découvert lorsque l'anneau indicateur de sertissage (94) se trouve dans la position d'indication de sertissage.

11. Raccord à sertir selon la revendication 8 ou 9, **caractérisé en ce que** le premier tronçon axial (98) de l'anneau indicateur de sertissage (94) est distant d'une extrémité axiale (96) de la douille de sertissage (30) et **en ce que** le deuxième tronçon (100) de l'anneau indicateur de sertissage (94) est, à l'extrémité axiale (96) de la douille de sertissage (30), pris par cette dernière.

12. Raccord à sertir selon la revendication 11, **caractérisé en ce que** l'anneau indicateur de sertissage (94) présente, à l'intérieur de sa région prise par l'extrémité axiale (96) de la douille de sertissage (30), un repère (104) masqué par la douille de sertissage (30), dans la position initiale de l'anneau indicateur de sertissage (94), lequel repère est positionné à l'extérieur de la douille de sertissage (30) lorsque l'anneau indicateur de sertissage (94) se trouve dans la position d'indication de sertissage.

13. Raccord à sertir selon la revendication 8, **caractérisé en ce que** le deuxième tronçon (100) de l'anneau indicateur de sertissage (94) est disposé extérieurement contre une extrémité axiale (96) de la douille de sertissage (30), **en ce que** le premier tronçon (98) de l'anneau indicateur de sertissage (94) est pris par l'extrémité axiale (96) de la douille de sertissage (30) et **en ce que** les deux tronçons (98, 100) de l'anneau indicateur de sertissage (94) sont disposés de façon sensiblement concentrique l'un à l'autre et avec interposition de l'extrémité axiale (96) de la douille de sertissage (30).

14. Raccord à sertir selon la revendication 13, **caractérisé en ce que** les deux tronçons (98, 100) de l'anneau indicateur de sertissage (94) sont reliés l'un à l'autre par des barrettes (106) orientées radialement.

15. Raccord à sertir selon la revendication 14, **caractérisé en ce que** les barrettes (106) enserrent l'extrémité axiale (96) de la douille de sertissage (30) ou s'étendent à travers des fentes ouvertes (112) situées dans l'extrémité axiale (96) de la douille de sertissage (30).

16. Raccord à sertir selon la revendication 14 ou 15, **caractérisé en ce que** le deuxième tronçon (100) de l'anneau indicateur de sertissage (94) est interrompu dans les régions circonférentielles (110) entre les régions (108) des barrettes (106) dépassant de la douille de sertissage (30) en direction radiale.

17. Raccord à sertir selon l'une des revendications 8 à 16, **caractérisé en ce que** l'anneau indicateur de sertissage (94) est, dans sa position d'indication de sertissage, déplacé axialement dans un sens l'écartant de la douille de sertissage (30).

18. Raccord à sertir selon l'une des revendications 1 à 17, **caractérisé en ce que** le corps de raccord (12) et/ou la douille de sertissage (30) présente une surface de guidage pour le guidage radial de l'outil de sertissage (62), lors de la compression.

19. Procédé pour le sertissage d'un raccord à sertir selon l'une des revendications 1 à 7, dans lequel
- au moyen d'un outil de sertissage (62), on agit sur la zone de compression (66) de la douille de sertissage (30) du raccord à sertir (10), pour le sertissage de ce dernier, et les brides de liaison (64) sont alors détruites et/ou séparées des segments d'anneau (68, 70, 72) de l'anneau indicateur de sertissage (52), de sorte que pour l'indication de l'état serti du raccord à sertir (10), les segments d'anneau (68, 70, 72) sont détachés l'un de l'autre et tombent de la douille de sertissage (30).

20. Procédé pour le sertissage d'un raccord à sertir selon l'une des revendications 8 à 18, dans lequel
- au moyen d'un outil de sertissage (62), on agit sur la zone de compression (66) de la douille de sertissage (30) du raccord à sertir (10), pour le sertissage de ce dernier, ainsi que sur la surface inclinée (102) de l'anneau indicateur de sertissage (94) en vue de le déplacer axialement en translation, pour l'indication de l'état serti du raccord à sertir (10).
